# EUROPÄISCHE PATENTSCHRIFT

(11) **EP 0 959 155 B1**
(45) Veröffentlichungstag und Bekanntmachung des Hinweises auf die Patenterteilung: **03.11.2004**
(21) Anmeldenummer: 99108069.8
(22) Anmeldetag: 23.04.1999
(51) Int. Cl.: D01G 7/08

(54) **Ballenöffner**
Bale opening machine
Ouvreuse de balles

(30) Priorität: 25.04.1998 DE 29807566 U
(43) Veröffentlichungstag der Anmeldung: 24.11.1999
(73) Patentinhaber: Temafa Maschinenfabrik GmbH, 51469 Bergisch Gladbach (DE)
(72) Erfinder: Bruhn, Michael, 51429 Bergisch Gladbach (DE); Werner, Michael, 53809 Ruppichterrath (DE); Schworm, Markus, 67065 Ludwigshafen (DE)
(74) Vertreter: Canzler, Rolf, Dipl.-Ing.

(56) Entgegenhaltungen:
- EP-A- 0 392 869
- EP-A- 0 635 589
- DE-U- 29 516 323
- GB-A- 1 085 022
- GB-A- 1 432 423
- US-A- 3 744 091
- US-A- 5 072 491
- US-A- 5 507 074

## Beschreibung

Die Erfindung betrifft einen Ballenöffner sowie ein Verfahren zum öffnen von Ballen aus Flachs- oder Hanfstroh, insbesondere von Rundballen, wobei der Ballenöffner einen im wesentlichen horizontal ausgerichteten Vorlagetisch mit einem Endlosförderband sowie einem sich daran anschließenden, gegen ein Steiglattentuch geneigten Zuführtisch mit Endlosförderband aufweist, welches das zu öffnende Material dem Steiglattentuch zuführt, das das Material an einer Rückstreifvorrichtung vorbeifördert, um es der nachfolgenden Reinigungsmaschine vorzulegen.

Bei der Ernte von Flachs- und Hanfstroh, das zu textilem und technischem Fasermaterial verarbeitet werden soll, wird dies in der Regel beim Mähen auf dem Feld in einem sog. Schwad abgelegt und nach einer teilweisen oder vollständigen Tauröste zu Rund- oder Rechteckballen, meist jedoch zu Rundballen gepreßt. Dabei werden durch eine fahrbare Rundballenpresse die Schwaden aufgenommen und durch die Rundballenpresse gewickelt und der so entstehende Rundballen als Ganzes geschnürt und abgelegt. Bei Flachsstroh erfolgt die Orientierung des in dem Ballen abgelegten Strohs bei einer Strohlänge von ca. 80 bis 90 cm im wesentlichen in Richtung der Ballenachse, während bei Hanf das Stroh bei Strohlängen bis zu 4 m in Umfangsrichtung des Ballens abgelegt wird.

Die für Faserstoffe wie z.B. Baumwolle bekannten Ballenöffner sind zum öffnen von Ballen aus Flachs- oder Hanfstroh oder ähnlichen Rohstoffen ungeeignet, und zwar nicht nur wegen der andersartigen und feineren Öffnungswerkzeuge, sondern wegen des völlig anderen Materials und anderem Aufbau der Ballen.

Durch die GB 1.432.423 ist eine Ballenöffnungsvorrichtung bekannt für Fasermaterial, bei welcher die Ballen über einen abwärts geneigten Zuführtisch mit Endlosförderband einem Steiglattentuch zugefördert werden, das in üblicher Weise mit Spitzen bestückt ist, die das Fasermaterial aus dem Ballen herauslösen und an einer Rückstreifvorrichtung vorbeifördern, damit es aufgelockert und gleichmäßig einer nachfolgenden Reinigungsmaschine vorgelegt wird. Die Rückstreifvorrichtung in Form einer Kammwalze rotiert in Gegenrichtung zur Bewegung des Steiglattentuches und streift größere Klumpen von Fasern zurück, so daß sie abwärts fallen, um dann erneut von dem Steiglattentuch wieder mitgenommen zu werden. Diese Kammwalze berührt nur tangential mit ihrem Umfang das auf dem Steiglattentuch hängende Fasergut, so daß der Eingriff der Kämme nur kurz ist. Dabei entsteht zwischen dem Eingriff der Kämme jeweils eine Lücke. Das Abstreifen und Zurückhalten batzenartig mit dem Steiglattentuch geförderten Materials erfolgt durch diesen kurzzeitigen Eingriff nur unvollständig. Außerdem besteht die Gefahr, daß bei dieser bekannten Einrichtung abgestreiftes Material in den drehbar aufgehängten Kämmen hängen bleibt und eingeklemmt wird.

Durch die EP 0 392 869 ist eine Rückstreifvorrichtung bekannt, die als Nadelleistentuch ausgebildet ist, das mit nadelartigen Stiften bestückt ist und parallel zum Steiglattentuch und in Gegenrichtung zu diesem bewegt wird. Diese bekannte Vorrichtung ermöglicht zwar ein intensives Kämmen des vom Steiglattentuch geförderten Materials, hat jedoch den Nachteil, daß diese Einrichtung sehr stark zum Verstopfen und damit Blockieren neigt, da das Material sich nicht wieder aus diesen Nadeln herauslöst.

Aufgabe der vorliegenden Erfindung ist es, einen Ballenöffner zum Öffnen von Ballen aus Flachs oder Hanf, Stroh und ähnlichen Rohstoffen zu schaffen, mit welchem nicht nur eine gute Öffnung und gleichmäßige Materialzufuhr zu den nachfolgenden öffnungs- und Reinigungsmaschinen erreicht wird, sondern auch ein zuverlässiges Arbeiten ohne Verstopfen oder Blockieren gewährleistet ist.

Diese Aufgabe wird durch die Merkmale des Anspruchs 1 gelöst. Durch die mit dem Steiglattentuch 7 zusammenarbeitende Rückstreifvorrichtung 8, die eine Rückstreifbewegung entlang dem Steiglattentuch 7 ausführt und entfernt vom Steiglattentuch 7 durch eine Rückwärtsbewegung wieder in ihre Ausgangslage gebracht wird, erfolgt der Rückstreifprozeß ohne Materialanhäufung an der Rückstreifvorrichtung. Ein Hängenbleiben von Material wird somit sehr wirkungsvoll vermieden. Die Anordnung von mindestens zwei Rückstreifrechen gewährleisten einen lückenlosen Eingriff. Die Einstellbarkeit des Abstandes der Rückstreifvorrichtung 8 gegenüber dem Steiglattentuch 7 ermöglicht eine weitere Dosierung der Materialmenge, wobei diese Dosierung zusätzlich noch verbessert wird durch ein dem Steiglattentuch 7 nachgeordnetes Lieferwalzenpaar. Weitere Einzelheiten der Erfindung werden anhand der Zeichnungen beschrieben. Es zeigen:
- Figur 1: eine Seitenansicht des erfindungsgemäßen Ballenöffners in schematischer Darstellung;

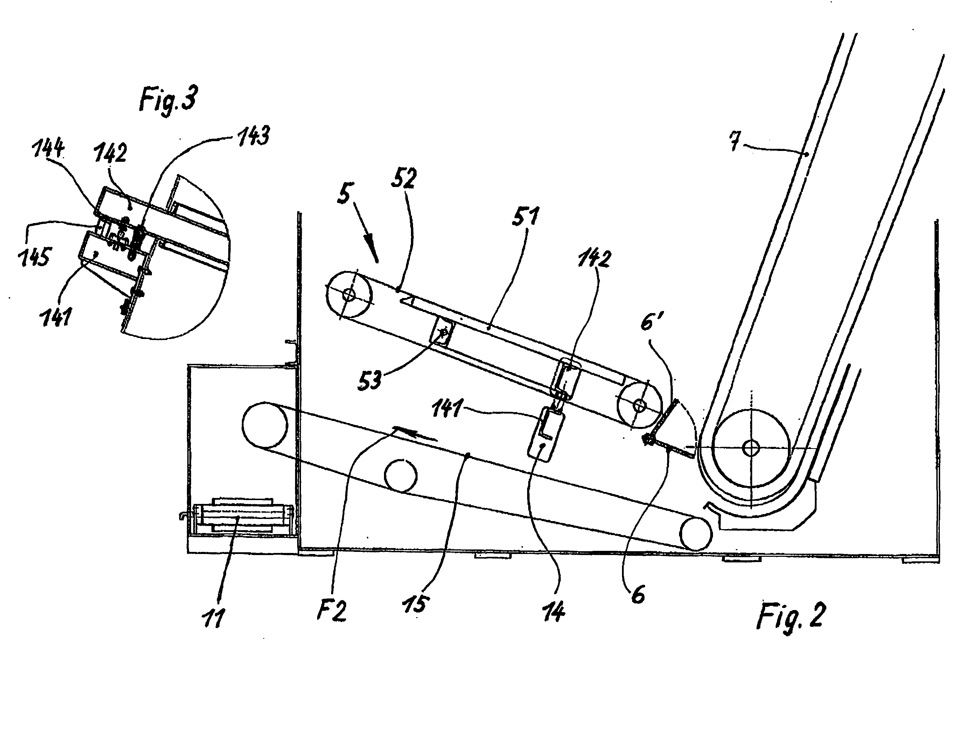

- Figur 2: den Zuführtisch mit Sensoreinrichtung aus Figur 1 in vergrößerter Darstellung;
- Figur 3: die Sensoreinrichtung zur Steuerung des Vorlagetisches aus Fig. 2 in Längsrichtung des Zuführtisches gesehen.

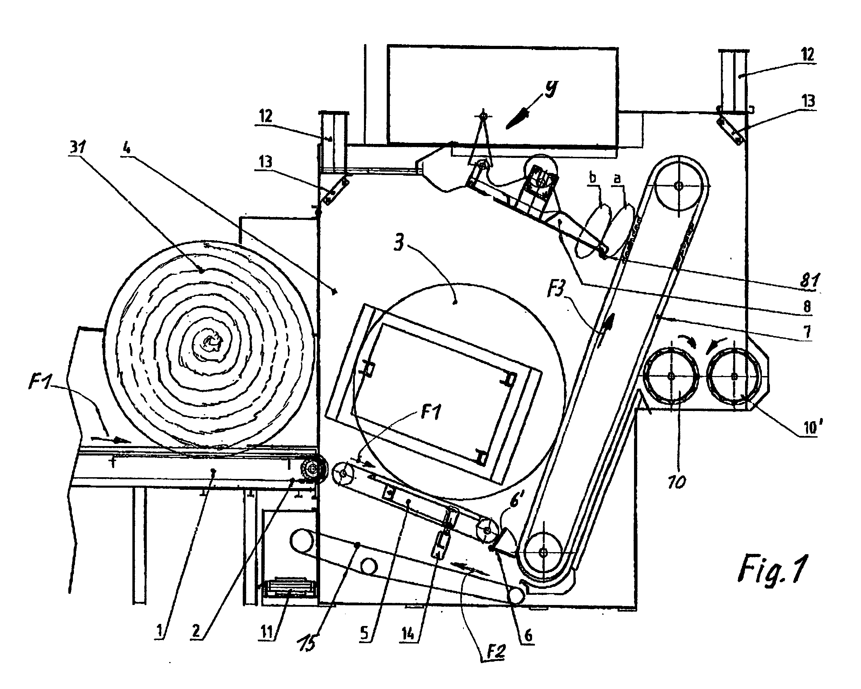

In Figur 1 ist ein mit einem Endlosförderband 2 ausgestatteter Vorlagetisch 1 zum Zuführen der Ballen 3, 31 aus Flachs- oder Hanfstroh dargestellt. An diesen Vorlagetisch 1 schließt sich ein in einem Gehäuse 4 des Ballenöffners untergebrachter Zuführtisch 5 an, der ebenfalls ein in Pfeilrichtung F1 antreibbares Förderband 52 aufweist.

Der Zuführtisch 5 ist in Förderrichtung gegen ein Steiglattentuch 7 abwärts geneigt. Durch diese Neigung rollt der Rundballen 3 durch seine Schwerkraft in die gezeigte Öffnungsposition und wird dort unter dem für das Abarbeiten des Ballens 3 erforderlichen Anlagedruck gegen das Steiglattentuch 7 gehalten, während der Ballen 31 auf dem Vorlagetisch in Wartestellung verbleibt. Die Neigung beträgt zu diesem Zweck vorzugsweise etwa 20°. Auf den Zuführtisch 5 folgt eine Abscheideinrichtung 6, die dazu dient, Fremdteile, aber auch Schäben, insbesondere aber Steine und dergleichen auszuscheiden, um im Fasermaterial unerwünschte Fremdteile und auch eine Beschädigung des Steiglattentuches 7 und der folgenden öffnungswerkzeuge zu vermeiden. Der Neigungswinkel des Steiglattentuches 7 wird durch die Art des zu verarbeitenden Materials bestimmt. Je weniger das Material am Steiglattentuch haftet und je weniger es aufgelöst ist, umso flacher läuft der das Material erfassende Teil des Steiglattentuches und umgekehrt. Das Steiglattentuch kann zu diesem Zweck in seinem Anstieg einstellbar sein.

Das Steiglattentuch 7 weist über seine Arbeitsbreite sich erstreckende Nadelleisten auf, die üblicherweise in einem Abstand von 50 bis 70 mm angeordnet sind. Die auf den Nadelleisten befestigten Nadeln haben eine Höhe von 20 bis 40 mm und sind in einem Winkel von etwa 45° in Förderrichtung angestellt. Je nach dem zu verarbeitenden Material kann das Steiglattentuch 7 auswechselbar mit bestifteten und unbestifteten Leisten sowie mit Nadelleisten unterschiedlicher Nadellänge bestückt werden.

Im Bereich des aufsteigenden Trums des Steiglattentuches 7 ist ein sich über die Breite des Steiglattentuches 7 erstreckender, mit Rechenzinken 81 bestückter Rückstreifrechen 8 angeordnet, der mittels eines Kurbelgetriebes 9 angetrieben ist. Der Antrieb des Rückstreifrechens 8 erfolgt in der Weise, daß der Rückstreifrechen 8 eine Rückstreifbewegung entlang dem Steiglattentuch 7 und entgegen dessen Förderrichtung ausführt, sich dann von dem Steiglattentuch 7 entfernt und somit entfernt vom Steiglattentuch seine Rückwärtsbewegung in Förderrichtung des Steiglattentuches ausführt, um dann wieder gegen das Steiglattentuch 7 sich in die Ausgangsstellung für die Rückstreifbewegung zu bewegen. Je nach Auslegung des Getriebes 9, welches vorzugsweise ein Kurbelgetriebe ist, vollführt der Rückstreifrechen 8 eine elliptische Bewegung, die in Figur 1 durch die beiden Kurven a und b angedeutet ist. Je nachdem, wie stark die Rückstreiffunktion sein soll, kann dieser Rückstreifrechen 8 stärker oder auch weniger gegen das Steiglattentuch 7 angestellt werden. Die Kurve b zeigt die Bewegung des Rückstreifrechens 8 in einem entfernteren Abstand, während die Kurve a eine enge Anstellung des Rückstreifrechens 8 gegen das Steiglattentuch 7 andeutet. Im Bereich dieses Rückstreifrechens 8 findet der eigentliche öffnungs- und Dosierprozeß statt, wobei in der zur Steiglattentuch-Laufrichtung entgegengesetzten Bewegungsrichtung des Rückstreifrechens 8 überschüssiges Material vom Steiglattentuch 7 zurückgestreift und damit eine gute Öffnung erreicht und eine annähernd gleichbleibende Materialmenge zur nachfolgenden Öffnungs- und Reinigungsmaschine durchgesetzt wird. Wie oben bereits erwähnt, ist der Abstand zwischen dem Steiglattentuch 7 und dem Abstreifrechen 8 veränderbar, wie es in Figur 1 durch die beiden elliptischen Kurven a und b angedeutet ist. Der Abstand ist zweckmäßig von 0 bis 200 mm einstellbar.

Dem Steiglattentuch 7 ist im Bereich des sich nach unten bewegenden Trums eine Abstreifwalze 10 zugeordnet, die mit einer Gegenwalze 10' ein Lieferwalzenpaar bildet. Mittels der Abstreifwalze 10 wird das geöffnete Fasermaterial von dem Steiglattentuch 7 abgelöst und durch die ein Lieferwalzenpaar bildenden Walzen 10 und 10' einem Materialspeicher bzw. der nachfolgenden Maschine zugeführt. Durch dieses aus der Abstreifwalze 10 und der Gegenwalze 10' gebildete Lieferwalzenpaar wird nicht nur das Material aus dem rücklaufenden Trum des Steiglattentuches 7 herausgelöst sondern es erfolgt auch nochmals eine Vergleichmäßigung der durch den Ballenöffner gelieferten Materialmenge. Es wird damit verhindert, daß größere Mengen des abgestreiften und auch des vliesartig vom Steiglattentuch 7 herunterhängenden Materials abfallen und unkontrolliert weitergegeben werden.

Die Abscheideeinrichtung 6 hat im wesentlichen die Form einer Gabel oder eines Kammes, der in Abständen von ca. 100 bis 150 mm Kamm- oder Gabelzinken aufweist, deren freie Länge etwa 120 mm betragen. Die Abscheideeinrichtung 6 ist um eine im Abstand von dem Steiglattentuch 7 liegende Horizontalachse 61 vorzugsweise gegen Federkraft von dem Steiglattentuch 7 weg nach oben verschwenkbar, so daß ein Blockieren der Einrichtung für den Fall verhindert wird, daß im Steiglattentuch 7 oder auch in den Zinken der Abscheideeinrichtung 6 Fasermaterial hängengeblieben ist.

Unterhalb der gabelförmigen Abscheideeinrichtung 6 ist ein sich mindestens über die Arbeitsbreite des Steiglattentuches 7 erstreckendes Förderaggregat angeordnet, welches vorzugsweise ein Querförderband 11 aufweist, um die ausgeschiedenen Fremdteile aus dem Ballenöffner abzutransportieren. Da jedoch in dem Bereich unter dem zuführtisch 5 sich meist viel Staub und Schäben ablagern, ist es zweckmäßig, eine sich automatisch reinigende Schmutzauffangvorrichtung in das Förderaggregat zu integrieren in Form eines sich über den Raum unterhalb des Zuführtisches 5 erstreckenden Transportbandes 15. Dieses Transportband 15 fängt nicht nur die ausgeschiedenen Fremdteile auf, sondern allen Staub und Schmutz, der durch die Öffnung der Ballen im Bereich des Zuführtisches entsteht. Die Transportbewegung ist entgegengesetzt zum Zuführtisch 5 in Richtung des Pfeiles F₂. Das Transportband 15 übergibt den aufgefangenen Schmutz und Abfall an das Quertransportband 11, welches die Beförderung aus der Maschine besorgt. Anstelle des Quertransportbandes 11 kann auch eine pneumatische Fördervorrichtung vorgesehen sein, die mit Saug- oder Blasluft oder kombiniert arbeitet.

Die Abscheideeinrichtung arbeitet wie folgend: Über den Zuführtisch 5 gelangt das zu öffnende Material in den Bereich des Steiglattentuches 7 und auch in die Lücke zwischen dem Zuführtischende und dem aufsteigenden Steiglattentuch 7, von dem auch durch die Auflösung des Ballens 3 Material und damit auch Fremdteile herabfallen. Die Abstände der Gabelzinken sind so gewählt, daß die Fremdteile durchfallen, jedoch das strohartige Material darüber gleitet und vom Steiglattentuch 7 erfaßt werden kann. Um eine Beschädigung des Steiglattentuches 7 zu vermeiden, wenn sich zwischen diesem und dem Rechen 6 Material verhakt hat, kann dieser in Förderrichtung des Steiglattentuches 7 ausweichen und klappt nach oben in die mit 6' bezeichnete Stellung. Durch eine Rückstellkraft, beispielsweise eine Feder, wird der Rechen 6 wieder in seine, die Lücke schließende Stellung zurückbewegt. Durch diese Ausweichbewegung wird eine Beschädigung des Steiglattentuches 7 oder auch des Rechens 6 verhindert.

Der erfindungsgemäße Ballenöffner arbeitet wie folgt: Auf den Vorlagetisch 1 wird ein Ballen 3 aufgelegt. Durch das Endlosförderband 2 wird dieser am Ende an den Zuführtisch 5 übergeben, d.h. der Ballen 3 rollt durch sein Eigengewicht auf dem schrägen Zuführtisch 5 gegen das Steiglattentuch 7. Unter dem Förderband 52 des Zuführtisches 5 ist eine Sensorplatte 51 angeordnet, auf welche der Ballen 3 durch sein Gewicht drückt. Diese Sensorplatte 51 ist auf zwei Querträgern 142 gelagert, wobei sie sich um eine Achse 53 verschwenken kann, während durch die Belastung der Träger 142 gegen eine auf dem Träger 141 fest in der Maschine gelagerte Pufferfeder 143 drückt. Diese Feder 143 ist Teil einer Sensoreinrichtung 14, zu der eine Sicherungsstütze 145 sowie ein Sensorschalter 144 gehören. Die Sicherungsstütze 45 sorgt dafür, daß selbst bei großen Ballengewichten und stoßartigen Belastungen des Zuführtisches 5 und der Sensorplatte 51 eine Beschädigung des Sensorschalters 144 vermieden wird.

Durch das Niederdrücken der Sensorplatte 51 wird der Sensorschalter 144 betätigt und das Endlosförderband 2 des Vorlagetisches 1 stillgesetzt, so daß der nachfolgende Ballen 31 in Wartestellung verbleibt, bis der Ballen 3 aufgearbeitet ist. Hierfür hat sich als besonders geeignet ein Näherungsinitiator erwiesen, bei dem die Schaltung in Abhängigkeit des durch die Feder 143 gegebenen Abstandes erfolgt. Sobald dann die Belastung der Sensorplatte geringer wird, wird diese durch die Pufferfeder 143 angehoben und über den dadurch geänderten Abstand des Sensorschalters 144 das Endlosförderband 2 des Vorlagetisches 1 in Bewegung gesetzt, so daß der nächste Ballen 31 auf den zuführtisch 5 gelangt, wie bereits beschrieben. Je nach Einstellung des Sensorschalters 144 kann die Nachlieferung auch schon bei einem bestimmten Rest des Ballens 3 erfolgen.

Auf diese Weise steuert sich die Materialzuführung automatisch, wobei die mit ihrer runden Umfangsfläche auf den Vorlagetisch 1 aufgelegten Ballen jeweils einzeln zur Öffnung durch das Steiglattentuch 7 vorgelegt werden. Durch die Neigung des Zuführtisches 5 wird der Ballen 3 gegen das Steiglattentuch 7 angedrückt, welches mit relativ hoher Geschwindigkeit läuft und somit aus dem Ballen mit seinen Nadelleisten Fasermaterial herauslöst. Dabei vollführt der Ballen 3 eine leichte Rollbewegung, so daß der Ballen entsprechend den gerollten Schichten abgearbeitet und geöffnet wird. Diese Art der Ballenöffnung ist besonders schonend für das Fasermaterial und zugleich auch effektiv, da die Öffnung entsprechend der in den Wickelschichten des Rundballens 3 bzw. 31 enthaltenen Schwaden erfolgt. Zur Unterstützung des Andruckes, insbesondere wenn der Ballen 3 bereits kleiner geworden ist und dadurch weniger Andruckkraft durch sein Eigengewicht besitzt, ist das Förderband 51 in Richtung des Pfeiles F₁ antreibbar, jedoch mit einer sehr geringen Geschwindigkeit. Selbstverständlich können mit dieser Einrichtung auch rechteckige Ballen geöffnet werden, jedoch fällt dann der Rolleffekt weg, der ein sehr schnelles Vorlegen eines neuen Ballens 30 auf den zuführtisch und in den Bereich des Steiglattentuches 7 bewirkt. Nur für diesen Fall ist u.U. der Zuführtisch zweckmäßig mit einer Umschaltung auf eine schnelle Zuliefergeschwindigkeit ausgestattet, die sich beim Rolleffekt erübrigt.

Das aus dem Ballen 3 herausgelöste Fasermaterial wird durch das Steiglattentuch 7 nach oben gefördert gegen den Rückstreifrechen 8. Die Geschwindigkeit des Steiglattentuches 7 ist mit der Bewegung des Rückstreifrechens 8 so abgestimmt, daß der Rückstreifrechen 8 jedes Mal zu einer neuen Rückstreifbewegung am Nadelband ansetzt, wenn die Stelle am Nadelband, die der Rückstreifrechen am Ende seiner Abstreifbewegung verlassen hat, die Einsatzstelle des Rückstreifrechens für die erneute Rückstreifbewegung erreicht hat. Auf diese Weise wird nicht nur ein nahtloser Anschluß an das durch den Rückstreifrechen noch nicht behandelte Material erreicht, sondern gleichzeitig wird durch die Trennung von Rückbewegung und Rückstreifbewegung eine erstaunlich gute Auflockerung und dadurch auch Vergleichmäßigung des geförderten Fasermaterials erzielt. Um diese Auflösung und gleichmäßige Mengendosierung aufrechtzuerhalten, ist dem Steiglattentuch 7 ein Lieferwalzenpaar 10, 10' nachgeordnet. Dieses Lieferwalzenpaar wird zweckmäßig aus der Abstreifwalze 10 für den rücklaufenden Trum des Steiglattentuches 7 und einer zusätzlichen Walze 10' gebildet. Die Liefergeschwindigkeit des Walzenpaares 10, 10' kann entsprechend der gewünschten Menge eingestellt werden. Die wesentliche Vergleichmäßigungsfunktion wird jedoch dadurch erreicht, daß die vom oberen Ende des Steiglattentuches 7 herabhängenden Fliesschwaden durch das Lieferwalzenpaar erfaßt und abgezogen werden, so daß diese nicht unkontrolliert abreissen und herabfallen. Gleichzeitig wird das aus den rücklaufenden Trum des Steiglattentuches 7 herausgelöste Material laufend den herabhängenden Fliesschwaden beigefügt, so daß die geförderte Materialmenge auch tatsächlich das Steiglattentuch 7 stets und gleichmäßig verläßt.

Sowohl die Steuerung der Materialzufuhr am Zuführtisch 5 als auch die Rückstreifeinrichtung 8 sowie das dem Steiglattentuch 7 nachgeordnete Lieferwalzenpaar 10, 10' können jeweils allein für sich mit Erfolg verwendet werden. Das Optimum wird jedoch durch das Zusammenwirken aller drei Vorrichtungen erreicht. Bei der Öffnung von quaderförmigen Rechteckballen hat zwar die Neigung des Zuführtisches 5 weniger Bedeutung, jedoch wirkt sich die Rückstreifvorrichtung 8 wie auch das Lieferwalzenpaar 10, 10' beim Öffnen dieser Ballen in gleicher Weise höchst vorteilhaft aus.

### Bezugszeichenliste

- 1: Vorlagetisch
- 2: Transportband
- 3: Rundballen
- 4: Gehäuse
- 5: Zuführtisch
- 51: Sensorplatte
- 52: Förderband
- 53: Schwenkachse
- 6, 6': Abscheidevorrichtung
- 61: Horizontalachse
- 7: Steiglattentuch
- 8: Rückstreifvorrichtung
- 81: Rechen-Zinken
- 9: Kurbelgetriebe
- 10, 10': Lieferwalzenpaar
- 10: Abstreifwalze
- 11: Querförderband
- 12: Staubabsaugkanal
- 13: Prallblech
- 14: Sensoreinrichtung
- 141: Träger ortsfest
- 142: Träger für Sensorplatte
- 143: Pufferfeder
- 144: Sensorschalter
- 145: Sicherungsstütze
- 15: Schmutzauffangvorrichtung

## Patentansprüche

1. Ballenöffner zum Öffnen von Ballen aus Flachs- oder Hanfstroh, insbesondere von runden Ballen, bestehend aus einem im wesentlichen horizontal ausgerichteten Vorlagetisch (1) mit einem Endlosförderband (2) sowie einem sich daran anschließenden, nach abwärts gegen ein Steiglattentuch (7) geneigten Zuführtisch (5) mit einem Endlosförderband (52), welches das zu öffnende Material dem Steiglattentuch (7) zuführt, das das Material an einer Rückstreifvorrichtung vorbeifördert und zur Vorlage an die nachfolgende Reinigungsmaschine abgibt, **dadurch gekennzeichnet, daß** die mit dem Steiglattentuch (7) zusammenarbeitende Rückstreifvorrichtung aus einem oder mehreren Rückstreifrechen (8) besteht, die eine Rückstreifbewegung entlang und entgegen der Förderrichtung des Steiglattentuches (7) ausführen und eine Rückwärtsbewegung dieser Rückstreifrechen (8) entfernt vom Steiglattentuch (7) und in dessen Förderrichtung ausführen.

2. Vorrichtung nach Anspruch 1, **dadurch gekennzeichnet, daß** die Rückstreifrechen (8) schwingend gelagert und durch ein Kurbelgetriebe (9) angetrieben sind.

3. Vorrichtung nach einem der Ansprüche 1 oder 2, **dadurch gekennzeichnet, daß** der Abstand des Rückstreifrechens (8) gegenüber dem Steiglattentuch (7) einstellbar ist.

4. Vorrichtung nach einem oder mehreren der Ansprüche 1 bis 3, **dadurch gekennzeichnet, daß** mindestens zwei Rückstreifrechen (8) abwechselnd ihre Rückstreifbewegung gegenüber dem Steiglattentuch (7) ausführen.

5. Vorrichtung nach Anspruch 4, **dadurch gekennzeichnet, daß** die Rückstreifrechen (8) in Bewegungsrichtung des Steiglattentuches (7) hintereinander angeordnet sind.

6. Vorrichtung nach einem oder mehreren der Ansprüche 1 bis 5, **dadurch gekennzeichnet, daß** dem Steiglattentuch (7) ein Lieferwalzenpaar (10, 10') nachgeordnet ist.

7. Vorrichtung nach Anspruch 6, **dadurch gekennzeichnet, daß** die eine Walze (10) des Lieferwalzenpaares (10, 10') dem rücklaufenden Trum des Steiglattentuches (7) als Abstreifwalze zugeordnet ist.

8. Vorrichtung nach einem oder mehreren der Ansprüche 1 bis 7, **dadurch gekennzeichnet, daß** mindestens ein Staubabsaugkanal (12) vorgesehen ist, dem ein Prallblech (13) für mitgerissenes Fasergut vorgeschaltet ist.

9. Verfahren zum Öffnen von Ballen aus Flachs- oder Hanfstroh, insbesondere von runden Ballen mit einem Ballenöffner, bestehend aus einem im wesentlichen horizontal ausgerichteten Vorlagetisch (1) mit einem Endlosförderband (2) sowie einem sich daran anschließenden, nach abwärts gegen ein Steiglattentuch (7) geneigten Zuführtisch (5) mit einem Endlosförderband (52), welches das zu öffnende Material dem Steiglattentuch (7) zuführt, das das Material an einer Rückstreifvorrichtung vorbei fördert und zur Vorlage an die nachfolgende Reinigungsmaschine abgibt, **dadurch gekennzeichnet, daß** die mit dem Steiglattentuch (7) zusammenarbeitende Rückstreifvorrichtung einen oder mehrere Rückstreifrechen (8) aufweist, die mit ihren Rechenzinken (81) eine Rückstreifbewegung entlang und entgegen der Förderrichtung des Steiglattentuches (7) ausführen, am Ende dieser Rückstreifbewegung sich von dem Steiglattentuch (7) entfernen und in dessen Förderrichtung rückwärts bewegt werden, um wieder in die Ausgangslage zu gelangen.

10. Verfahren nach Anspruch 9, **dadurch gekennzeichnet, daß** die Geschwindigkeit des Steiglattentuches (7) mit der Bewegung des Rückstreifrechens (8) so abgestimmt ist, daß die Rechenzinken (81) zu einer neuen Rückstreifbewegung am Steiglattentuch (7) ansetzen, wenn die Stelle am Steiglattentuch (7), die die Rechenzinken (81) am Ende ihrer Abstreifbewegung verlassen haben, die Einsatzstelle der Rechenzinken (81) für die erneute Rückstreifbewegung erreicht hat.

11. Verfahren nach einem der Ansprüche 9 oder 10, **dadurch gekennzeichnet, daß** die Rechenzinken (81) eine ellipsenartige Bewegung ausführen.

## Claims

1. A bale opener for opening bales of flax or hemp straw, particularly round bales, comprising a feed table (1) of a substantially horizontal orientation including an endless conveyor belt (2) and a supply table (5) joining it and inclined downwardly towards a spiked lattice (7), with an endless conveyor belt (52) which supplies the feedstock to be opened to said spiked lattice (7) which conveys said feedstock past a back stripping device and delivers it for a feed to the succeeding cleaning machine, **characterized in that** said back stripping device interacting with said spiked lattice (7) is composed of one or more evener combs (8) which carry out a back stripping movement along and against the direction of conveyance of said spiked lattice (7) and carry out a backward movement of these evener combs (8) remotely from said spiked lattice (7) and in the direction of conveyance thereof.

2. The device according to claim 1, **characterized in that** said evener combs (8) are oscillatingly supported and are driven by a crank mechanism (9).

3. The device according to any one of claim 1 or 2, **characterized in that** the distance of said evener comb (8) is adjustable with respect to said spiked lattice (7).

4. The device according to one or more of claims 1 to 3, **characterized in that** at least two evener combs (8) alternately carry out their back stripping movement with respect to said spiked lattice (7).

5. The device according to claim 4, **characterized in that** said evener combs (8) are arranged in succession in the direction of movement of the spiked lattice (7).

6. The device according to one or more of claims 1 to 5, **characterized in that** the spiked lattice (7) is followed by a couple of delivery rollers (10, 10').

7. The device according to claim 6, **characterized in that** one roller (10) of said couple of delivery rollers (10, 10') is associated as a stripping roller with the returning strand side of said spiked lattice (7).

8. The device according to one or more of claims 1 to 7, **characterized in that** at least one dust exhaust duct (12) is provided which is preceded by a baffle plate (13) for any fibre stock entrained.

9. A method for opening bales of flax or hemp straw, particularly round bales, by using a bale opener, comprising a feed table (1) of a substantially horizontal orientation including an endless conveyor belt (2) and a supply table (5) joining it and inclined downwardly towards a spiked lattice (7), with an endless conveyor belt (52) which supplies the feedstock to be opened to said spiked lattice (7) which conveys said feedstock past a back stripping device and delivers it for a feed to the succeeding cleaning machine, **characterized in that** said back stripping device interacting with said spiked lattice (7) has one or more evener combs (8) which carry out a back stripping movement along and against the direction of conveyance of said spiked lattice (7) by their comb prongs (81), are withdrawn from said spiked lattice (7) at the end of said back stripping movement and are moved backwards in the direction of conveyance thereof to get to the initial position again.

10. The method according to claim 9, **characterized in that** the speed of said spiked lattice (7) is harmonized with the movement of the evener comb (8) so as to cause said comb prongs (81) to start making a fresh back stripping movement on said spiked lattice (7) when the point on said spiked lattice (7) that was left by said comb prongs (81) at the end of their stripping movement has reached the point of engagement of said comb prongs (81) for a fresh back stripping movement.

11. The method according to one of claim 9 or 10, **characterized in that** said comb prongs (81) perform an ellipsoidal movement.

## Revendications

1. Ouvreur de ballots pour l'ouverture de ballots à base de paille de lin ou de chanvre, en particulier de ballots ronds, comprenant une table d'alimentation (1) orientée sensiblement horizontalement avec une bande transporteuse sans fin (2) et une table d'arrivée (5) consécutive à la bande et inclinée vers le bas vers un tablier sans fin montant (7) avec une bande transporteuse continue (52), qui amène le matériau à ouvrir au tablier sans fin montant (7), qui transporte le matériau devant un dispositif égalisateur et l'envoie pour l'alimentation à la machine à nettoyer consécutive, **caractérisé en ce que** le dispositif égalisateur coopérant avec le tablier sans fin montant (7) comprend un ou plusieurs râteaux égalisateurs (8), qui exécutent un mouvement d'égalisation le long du sens de transport et dans le sens contraire au sens de transport du tablier sans fin montant (7) et exécutent un mouvement arrière de ces râteaux égalisateurs (8) à distance du tablier sans fin montant (7) et dans son sens de transport.

2. Dispositif selon la revendication 1, **caractérisé en ce que** les râteaux égalisateurs (8) sont logés de façon oscillante et sont entraînés par un mécanisme à bielle-manivelle (9).

3. Dispositif selon l'une quelconque des revendications 1 ou 2, **caractérisé en ce que** la distance du râteau égalisateur (8) au tablier sans fin montant (7) est réglable.

4. Dispositif selon l'une quelconque ou plusieurs des revendications 1 à 3, **caractérisé en ce qu'**au moins deux râteaux égalisateurs (8) exécutent alternativement leur mouvement d'égalisation par rapport au tablier sans fin montant (7).

5. Dispositif selon la revendication 4, **caractérisé en ce que** les râteaux égalisateurs (8) sont disposés les uns derrière les autres dans le sens de déplacement du tablier sans fin montant (7).

6. Dispositif selon l'une quelconque ou plusieurs des revendications 1 à 5, **caractérisé en ce qu'**une paire de cylindres délivreurs (10, 10') est placée en aval du tablier sans fin montant (7).

7. Dispositif selon la revendication 6, **caractérisé en ce qu'**un cylindre (10) de la paire de cylindres délivreurs (10, 10') est attribué au brin de retour du tablier sans fin montant (7) en tant que rouleau détacheur.

8. Dispositif selon l'une quelconque ou plusieurs des revendications 1 à 7, **caractérisé en ce qu'**au moins un canal d'aspiration des poussières (12) est prévu, en amont duquel est placée une tôle de chicane (13) pour la matière fibreuse entraînée.

9. Procédé pour l'ouverture de ballots à base de paille de lin ou de chanvre, en particulier de ballots ronds avec un ouvreur de ballots, comprenant une table d'alimentation (1) orientée sensiblement horizontalement avec une bande transporteuse continue (2) et une table d'amenée (5) consécutive à cette bande et inclinée vers le bas vers un tablier sans fin montant (7) avec une bande transporteuse continue (52), qui amène le matériau à ouvrir au tablier sans fin montant (7), lequel transporte le matériau devant un dispositif égalisateur et l'envoie pour l'alimentation à la machine à nettoyer consécutive, **caractérisé en ce que** le dispositif égalisateur coopérant avec le tablier sans fin montant (7) présente un ou plusieurs râteaux égalisateurs (8), qui exécutent un mouvement d'égalisation avec leurs dents de râteau (81) le long du sens du transport et contrairement au sens de transport du tablier sans fin montant (7), s'éloignent du tablier sans fin montant (7) à la fin de ce mouvement d'égalisation et sont déplacés en arrière dans la direction de transport de ce tablier, afin d'arriver à nouveau dans la position de départ.

10. Procédé selon la revendication 9, **caractérisé en ce que** la vitesse du tablier sans fin montant (7) est harmonisée avec le déplacement du râteau égalisateur (8) de telle sorte que les dents de râteau (81) s'apprêtent à effectuer un nouveau déplacement égalisateur sur le tablier sans fin montant (7) lorsque l'emplacement sur le tablier sans fin montant (7), que les dents de râteau (81) ont quitté à la fin de leur mouvement égalisateur, a atteint le point d'application des dents de râteau (81) pour le nouveau mouvement égalisateur.

11. Procédé selon l'une quelconque des revendications 9 ou 10, **caractérisé en ce que** les dents de râteau (81) exécutent un mouvement en forme d'ellipse.
